(19) Europäisches Patentamt / European Patent Office / Office européen des brevets

(11) **EP 3 536 441 B1**

(12) **EUROPEAN PATENT SPECIFICATION**

(45) Date of publication and mention
of the grant of the patent:
**14.02.2024 Bulletin 2024/07**

(51) International Patent Classification (IPC):
**B23K 26/364** *(2014.01)*    **B21D 37/01** *(2006.01)*
**B21D 37/20** *(2006.01)*    **B23K 26/00** *(2014.01)*
**B21D 22/28** *(2006.01)*    **B21D 51/26** *(2006.01)*
**B23K 26/0622** *(2014.01)*    B23K 103/00 *(2006.01)*

(21) Application number: **17866752.3**

(22) Date of filing: **01.09.2017**

(52) Cooperative Patent Classification (CPC):
**B23K 26/0624; B21D 37/01; B21D 37/20;**
**B23K 26/364;** B21D 22/28; B21D 51/26;
B23K 2103/50

(86) International application number:
**PCT/JP2017/031658**

(87) International publication number:
**WO 2018/083878 (11.05.2018 Gazette 2018/19)**

(54) **METHOD FOR FORMING FINE PERIODIC STRUCTURAL GROOVES ON DIAMOND SURFACE**

VERFAHREN ZUR FORMUNG VON FEINEN PERIODISCHEN STRUKTURELLEN RILLEN AUF EINER DIAMANTENOBERFLÄCHE

PROCÉDÉ DE FORMATION DE FINES RAINURES STRUCTURALES PÉRIODIQUES SUR UNE SURFACE DE DIAMANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2016 JP 2016214553**

(43) Date of publication of application:
**11.09.2019 Bulletin 2019/37**

(73) Proprietor: **Toyo Seikan Group Holdings, Ltd.
Shinagawa-ku
Tokyo 141-8627 (JP)**

(72) Inventors:
• **SHIROISHI, Ryozo
Yokohama-shi, Kanagawa 240-0062 (JP)**
• **TAKAO, Kenichi
Yokohama-shi, Kanagawa 240-0062 (JP)**
• **YUASA, Yoshiyuki
Yokohama-shi, Kanagawa 240-0062 (JP)**

(74) Representative: **J A Kemp LLP
80 Turnmill Street
London EC1M 5QU (GB)**

(56) References cited:
JP-A- H11 277 160    JP-A- 2003 165 548
JP-A- 2004 188 511    JP-A- 2004 188 511
JP-A- 2005 066 687    JP-A- 2005 066 687

**Description**

Technical Field:

This invention relates to a method of forming grooves of a fine periodic structure in the surface of the diamond. The invention facilitates a method of transferring the grooves of the fine periodic structure relying on the plastic work by using a mold for plastic work that has, in the working surface thereof, the grooves of the fine periodic structure formed by the above method and, specifically, by using a die for ironing work and the above mold.

Background Art:

As is well known, a carbon film containing a diamond component which comprises crystals of carbon has an extremely high hardness and excellent wear resistance. Therefore, it has heretofore been attempted to improve the machinability and the mechanical service life by forming a carbon film on the surface of the cutting tools, such as chisels, end mills, files, on the surfaces of the molds for plastic work, such as punches, dies, etc. and on the surfaces of the sliding members such as valve lifters, bearings, etc.

The carbon films of the above-mentioned type include a diamond film that contains much diamond component and a DLC film (diamond-like carbon film) that contains much graphite component. Specifically, the carbon films used for the cutting tools and for the molds for plastic work have been studied extensively for their compositions and properties.

For instance, a patent document 1 proposes a metallurgical jig that has a hard carbon film comprising the diamond and amorphous carbon formed on the surface on which a to-be-worked metal slides,

wherein the hard carbon film has a surface roughness Rmax which is not more than 2 $\mu$m and an intensity ratio $I_G/I_D$ calculated from the Raman spectrometry and represented by the following formula,

$$I_G/I_D$$

wherein $I_D$ is a maximum peak intensity present at $1333 \pm 10$ cm$^{-1}$, and $I_G$ is a maximum peak intensity present at $1500 \pm 100$ cm$^{-1}$,

of 0.2 to 20 ($I_D/I_G = 0.05$ to 5). Concretely speaking, this metallurgical jig is a die or a punch used for the ironing work, or is a drawing die used for stretching the wires.

A patent document 2 describes a diamond film for the cutting tools formed on a base plate, the film being formed of a plurality of layers, the layer of the uppermost surface (third layer) having an intensity ratio ($I_D/I_G$) of not less than 0.6 as measured by the Raman spectrometry.

As means for forming a fine periodical structure in the surface of the diamond, further, a patent document 3 proposes a method that uses a focused ion beam while a patent document 4 discloses a method that uses a femtosecond laser.

However, the method that uses the focused ion beam (FIB) not only requires an expensive apparatus but also poses a problem of narrow working range. The method that uses the femtosecond laser also needs an expensive and bulky apparatus accompanied by a problem of only a small amount of working.

Therefore, the above methods can be applied to the surface of the diamond formed on the surfaces of the cutting tools having small working surfaces, but cannot be substantially applied to the molds that have large working surfaces of the diamond. This is because a lot of cost and time are required.

Further, a patent document 5 filed by the present applicant is disclosing an art of producing a metal container by forming fine grooves of a periodic structure for developing a structural color (hologram) in the working surface of a mold for forming metal containers, and iron-working the container by using the mold thereby to transfer the fine grooves of the periodic structure onto the metal container.

However, the fine grooves of the periodic structure formed in the surface of the mold are subject to be worn out or metal adheres thereon to a remarkable degree during the ironing work. Therefore, the grooves of the fine periodic structure have a short service life and are not suited for repetitively executing the working. As a result, the grooves of the fine periodic structure could not be put into a practical use for mass production on an industrial scale.

Prior Art Documents:

Patent Documents:

Patent document 1: JP-A-5-169162
Patent document 2: Japanese Patent No. 4733193
Patent document 3: JP-A-2004-188511 representing the starting point of the present invention
Patent document 4: Japanese Patent No. 5336095
Patent document 5: JP-A-2003-165548

Outline of the Invention:

Problems that the Invention is to Solve:

It is, therefore, an object of the present invention to provide a method that is capable of forming grooves of a fine periodic structure in the surface of the diamond over a wide range without using any expensive and bulky apparatus.

This method may be used in the production of a mold for plastic work and, specifically, a die for ironing work, having a working surface formed by the surface of the diamond that has the grooves of the fine periodic structure formed therein by the above method.

This mold may be used in a method of transferring the grooves of the fine periodic structure by using the mold for plastic work and, specifically, by using the die for ironing work.

Means for Solving the Problems:

According to the present invention, there is provided a method of forming grooves of a fine periodic structure in the surface of the diamond as defined in claim 1, with the step of : irradiating at least part of the surface of the diamond having a mean surface roughness Ra of not more than 0.1 $\mu$m with a laser beam of a pulse width of not less than 1 ns generating a periodic intensity profile.

In the method of forming grooves of the fine periodic structure of the present invention, it is desired that:

> (1) The grooves of the fine periodic structure are regularly arranged to express a structural color;
> (2) The surface of the diamond is irradiated with the laser beam with a fluence of not less than 200 mJ/cm$^2$; and
> (3) The laser beam has a wavelength of shorter than 1064 nm.

The method of the present invention may be used in the production of a mold for plastic work including a rigid member of which the working surface is the surface of the diamond,
wherein grooves of a fine periodic structure are formed in the surface of the diamond, the grooves of the fine periodic structure being regularly arranged to express a structural color.

In the mold for plastic work, it is desired that the surface of the diamond includes a film of the diamond and that the mold for plastic work is a die for ironing work.

The mold for plastic work may be used in a method of transferring grooves of a fine periodic structure by plastically working a metallic base material by using the mold for plastic work and, at the same time, transferring the grooves of the fine periodic structure onto the surface of the metallic base material to express a structural color.

In the above transferring method, a base material of aluminum or an aluminum alloy is desirably used as the metallic base material.

Further, as the method of plastic work, there can be exemplified a rolling work, a drawing work, an extrusion work and a stretching work. Among them, the ironing work is preferred.

This method can be used in the production of a seamless metal can having grooves of a fine periodic structure formed in the outer surface of a metallic can body portion to express a structural color.

Effects of the Invention:

According to the method of the present invention, the grooves of the fine periodic structure are formed by using a nanosecond laser. Therefore, it is allowed to form the grooves of the fine periodic structure without the need of using such an expensive and bulky apparatus as focused ion beam apparatus or femtosecond laser apparatus. Besides, the grooves of the fine periodic structure can be formed in a short period of time; i.e., the grooves of the fine periodic structure can be formed at a low cost and over a wide area. Therefore, this method can be very advantageously applied to forming the grooves of the fine periodic structure for developing a structural color (hologram).

Upon applying the above-mentioned method of the present invention to the die for ironing work that has a working surface made of the diamond, it becomes possible to maintain the grooves of the fine periodic structure formed in the surface of the diamond over extended periods of time without being worn out and without permitting metal to adhere thereon even after the ironing work is conducted repetitively. As a result, it is made possible to mass-produce the ironing-worked articles or metal cans such as aluminum cans having the grooves of the fine periodic structure transferred onto the surfaces thereof.

Brief Description of the Drawings:

> [Fig. 1] It is a side sectional view schematically illustrating the surface of the diamond having grooves of a fine periodic structure formed by a method of the present invention.
> [Fig. 2] It is a view schematically illustrating the structure of a laser irradiation apparatus used for forming the grooves of the fine periodic structure shown in Fig. 1.
> [Fig. 3] It is a diagram illustrating an interference region of laser beams irradiated from the apparatus of Fig. 2.
> [Fig. 4] It is a diagram illustrating a process of press forming based upon the ironing work.
> [Fig. 5] It is a side view schematically illustrating, on an enlarged scale, a die for ironing work having a surface of the diamond in which the grooves of the fine periodic structure are formed.

Modes for Carrying Out the Invention:

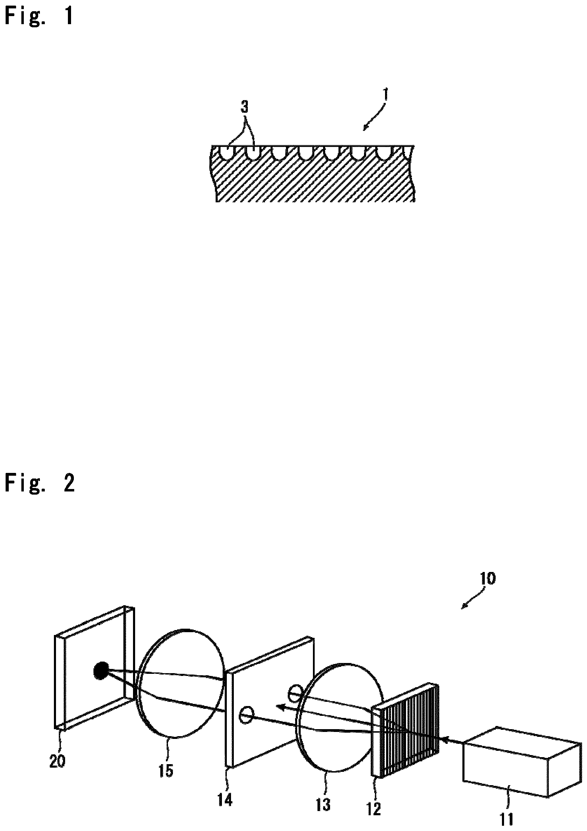

According to the present invention as shown in Fig. 1, grooves 3 of a fine periodic structure are formed in a surface 1 of the diamond being regularly arranged and maintaining a nearly equal distance.

The distance, width and depth of the grooves 3 are close to the wavelength of a visible ray (about 400 nm to 700 nm). The grooves 3 formed in many number cause the light to be diffracted. Interference of light occurs due to an optical path difference at the portions (protuberances) among the neighboring grooves 3, 3, and a structural color is thus expressed.

\<Surface of the diamond 1\>

In the invention, the surface of the diamond 1 is a film of the diamond of a polycrystalline structure formed by such means as vapor deposition. It is difficult to form a single crystal of the diamond that has a large area.

It is, further, desired that the above-mentioned film of the diamond has an intensity ratio represented by the following formula (1),

$$I_D / I_G \qquad (1)$$

wherein $I_D$ is a maximum peak intensity present at $1333 \pm 10$ cm$^{-1}$ in the Raman spectrometry of the surface of the carbon film, and $I_G$ is a maximum peak intensity present at $1500 \pm 100$ cm$^{-1}$ in the Raman spectrometry of the surface of the carbon film, of not less than 1.0 and, specifically, not less than 1.2 in the Raman spectrometry.

That is, the peak intensity $I_D$ is due to the diamond component in the film while the peak intensity $I_G$ is due to the graphite component in the film. Therefore, the larger the peak intensity ratio, the smaller the content of the graphite, indicating that the film is closer to a film (film of diamond) formed by the crystals of the diamond.

For instance, the film of the diamond whose peak intensity ratio lies within the above range is a very hard film having a Vickers' hardness of not less than 8000 and, further, having a high degree of chemical stability. Therefore, the film of the diamond is suited for forming the working surface of an ironing die that is used for executing a severe molding such as ironing work. If the intensity ratio is not higher than, for example, 1.0, then the film of the diamond contains much graphite component, and its hardness and the like properties are impaired. In this case, therefore, the film of the diamond is not suited for forming the working surface of the mold for plastic work, such as the die for ironing work that is used for executing severe molding.

Further, the surface of the diamond 1 is a smooth surface having an average surface roughness Ra (JIS B-0601-1994) of not more than 0.1 $\mu$m and, specifically, not more than 0.05 $\mu$m. Here, it is important to form fine grooves 3 of the periodic structure in such a smooth surface. This is because if the regularly arranged fine grooves 3 of the periodic structure are formed in a rough surface, then the interference of light is impaired by irregular reflection of light and it becomes difficult to express the structural color. Moreover, the smooth surface provides improved slipperiness and favorably serves as the working surface of the die for ironing work.

The film of the diamond having the above-mentioned peak intensity ratio and smooth surface is formed on the surface of a predetermined base material (e.g., rigid base material) by a known method such as CVD method like hot filament CVD method, microwave plasma CVD, high-frequency plasma CVD or hot plasma CVD. Thereafter, the surface of the diamond is polished.

The film is formed by using, as the starting gas, a gas that is obtained by diluting, usually, a hydrocarbon gas such as methane, ethane, propane or acetylene with a hydrogen gas to a concentration of about 1%. The starting gas often mixed with a gas such as oxygen, carbon monoxide or carbon dioxide in small amounts to adjust the quality of the film and the rate of forming the film.

Namely, the film is formed by using the above starting gas, heating the base material on which the film of the diamond is to be formed at a temperature of as high as 700 to 1000°C to decompose the starting gas to thereby generate active species, and growing the crystals of diamond on the base material. In forming the film, the graphite and amorphous carbon formed on the base material are selectively etched with the dissociated hydrogen atoms. The film, therefore, contains much diamond component and exhibits a peak intensity ratio in the Raman spectroscopy of the film that lies within the range mentioned above.

Here, the film of the diamond that is formed has a polycrystalline structure and its surface roughness Ra tends to become rougher than the above-mentioned range. To obtain the above-mentioned smooth surface, therefore, the surface of the film of the diamond is polished. There is thus formed, on the predetermined base material, the film of the diamond having both the peak intensity ratio in the Raman spectrometry and the surface roughness Ra that lie within the above-mentioned ranges.

After the film has been formed, the surface thereof can be polished by a method known per se.

For instance, as disclosed in JP-A-2011-177883 proposed by the present applicant, the surface roughness Ra of the film is adjusted to lie in the above-mentioned range by using a polishing member such as belt or wire having a surface that comprises a metal (Zr, Ta, Ti, W, Nb, Al, etc.) that easily reacts with carbon or a carburizing metal (Fe, Ni, Co, etc.), and by rubbing the surface of the carbon film and/or the surface of the polishing member by sliding thereon a polishing member using a heating means such as laser or the like while heating the surface at a temperature at which the diamond is not decomposed. There is thus obtained a desired film of the diamond or a desired surface 1 of the diamond.

<Forming the grooves 3 of the fine periodic structure>

In the present invention, the grooves 3 of the fine periodic structure are formed in the surface 1 of the diamond by utilizing the laser beam machining and interference. That is, the surface 1 of the diamond is so hard that the grooves cannot be formed therein by the machining by simply using the tools or cannot be formed, either, by simply focusing the laser beam thereon. Therefore, the fine grooves 3 of the periodic structure are formed by the laser beam machining by irradiating the laser beam in such a fashion that there generates a periodic intensity profile (i.e., interference of light).

The laser beam irradiation apparatus for executing the laser beam machining has a structure as shown in Fig. 2. The irradiation apparatus generally designated at 10 includes a laser oscillator 11, a beam splitter (transmission type diffractive optical element) 12, a collimator element (lens) 13, a light flux selection element 14 and a condensing element 15. A base material 20 having the surface 1 of the diamond is irradiated with the laser beam that has a periodic intensity profile, and the fine grooves 3 of the periodic structure are formed therein due to the interference of beams.

The laser oscillator (laser beam source) 11 outputs a laser beam of so-called nanoseconds, i.e., outputs a laser beam of a pulse width of not less than 1 ns and, specifically, 1 to 100 ns. The present invention preferably uses a YAG laser, a $YVO_4$ laser or a YLF laser.

That is, to form the fine grooves 3 of the periodic structure in the surface 1 of the diamond, it is necessary to use a pulse laser beam of high power. Further, to express the structural color relying upon the fine periodic structure, the grooves 3 of the fine periodic structure should have a pitch of about 0.5 to about 3 $\mu$m so that the color of visible light can be efficiently produced. To accurately machine the periodic structure, further, the laser beam must have a wavelength in a region shorter than the pitch of the grooves. Moreover, the grooves 3 of the fine periodic structure are formed by the laser abrasion by utilizing the interference of the laser beams. It, therefore, becomes necessary to use a laser of a high degree of coherency. For this purpose, the above-mentioned pulse laser is used, the wavelength thereof being, desirably, less than 1064 nm.

It is, further, desired that the laser oscillator 11 has a function for adjusting the number of pulses to be irradiated and is also capable of adjusting the laser output to control the energy density (fluence: energy per area irradiated with one pulse). For example, it is desired that the laser beam applied to the surface 1 of the diamond on the base material 20 has a fluence that is adjusted to be not less than 200 mJ/cm$^2$.

Here, the energy density (fluence) can be controlled by adjusting the laser output of the laser oscillator 11 and by, further, varying the diameter of the irradiated beam while maintaining the same laser output.

The beam splitter 12 is a transmission type optical element that triggers the diffraction since it has fine dents or protuberances that are periodically engraved in the surface thereof. The beam splitter 12 divides the laser beam into a plurality of light fluxes.

As the collimator element 13, there can be used a plano-convex lens made of, for example, a synthetic quartz having a focal distance of 200 mm. In this case, the collimator element 13 is placed at a position of 200 mm away from the beam splitter 12. The collimator element 13 permits the passage of the plurality of light fluxes divided by the beam splitter 12.

The light flux selection element 14 is placed at a position where the light fluxes that have passed through the collimator element 13 are focused. Of the plurality of light fluxes, those light fluxes unnecessary for the interference are shut off; i.e., only those light fluxes necessary for the interference are permitted to pass through.

As the condensing element 15, there can be used a plano-convex lens made of, for example, a synthetic quartz having a focal point of 100 mm. The condensing element 15 condenses the light fluxes that have passed through the light flux selection element 14 and causes the light fluxes to intersect and interfere.

As the collimator element and the condensing element, there can be used such optical elements as Fresnel lens and GRIN (Graded-Index) lens in addition to the convex lenses.

That is, the surface 1 of the diamond formed on the base material 20 is arranged at a predetermined distance from the condensing element 15 of the laser beam irradiation apparatus 10. This position is in an interference region where a plurality of light fluxes intersect due to the condensing element 15.

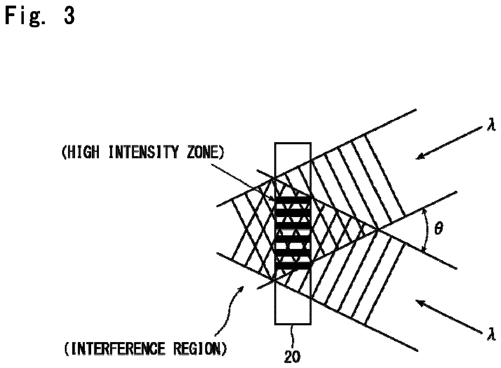

As shown in Fig. 3, the interference region is a high intensity profile zone where the surface 1 of the diamond formed on the base material 20 is irradiated with the laser beam. Here, the distance (period) d in the high intensity zone in the interference region varies depending upon the angle $\theta$ of intersection of the light fluxes. The period d in the high intensity zone can be found by using a laser wavelength $\lambda$ and an angle $\theta$ of intersection of the light fluxes in compliance with the following formula,

$$d = \lambda / (2 \sin (\theta /2))$$

As described above, the laser beam is irradiated in the interference region. Therefore, a periodic optical intensity profile is excited on the surface of the diamond on the base material 20, the laser abrasion takes place conspicuously in the high intensity zone, and the grooves 3 of the fine periodic structure are formed in the surface 1 of the diamond being regularly arranged to develop a structural color.

The above method uses a nanosecond laser as the laser beam instead of using a focused ion beam or a femtosecond laser. Therefore, the apparatus that is used is not expensive and, besides, the grooves 3 of the fine periodic structure can be formed over a wide range offering a very great advantage from the standpoint of putting the method of the invention into practice on an industrial scale.

Specifically, the grooves 3 of the fine periodic structure can be formed over a wide range. Moreover, the surface 1 of the diamond where the grooves 3 of the fine periodic structure are formed is hard and has excellent slipperiness. It is, therefore, best suited to apply the method of the present invention to the working surface of a mold for molding metal materials. For instance, the working surface of the mold for plastic work can be made to be the surface of the diamond, the mold for plastic work being, for example, a die for ironing work, a mold for rolling work, a mold for drawing work, a mold for extrusion work or a mold for stretching work. In this case, the grooves of the fine periodic structure can be formed in the surface of the diamond being regularly arranged to express a structural color.

By forming the grooves 3 of the fine periodic structure in the working surface of the mold over wide areas thereof, it is made possible to transfer the grooves 3 of the fine periodic structure onto wide areas of the surface of the metallic molded body obtained by the molding work and, therefore, to develop a clearly legible structural color on the surface of the metallic molded body contributing to greatly enhancing the commercial value.

The advantage of the present invention can be exhibited to a maximum degree particularly when the invention is applied to the working surface of the die for ironing work that is used for the severe ironing work.

<Die for ironing work>

Prior to describing the die for ironing work in which the grooves 3 of the fine periodic structure are formed, described below is the press working based on the ironing work by using the die.

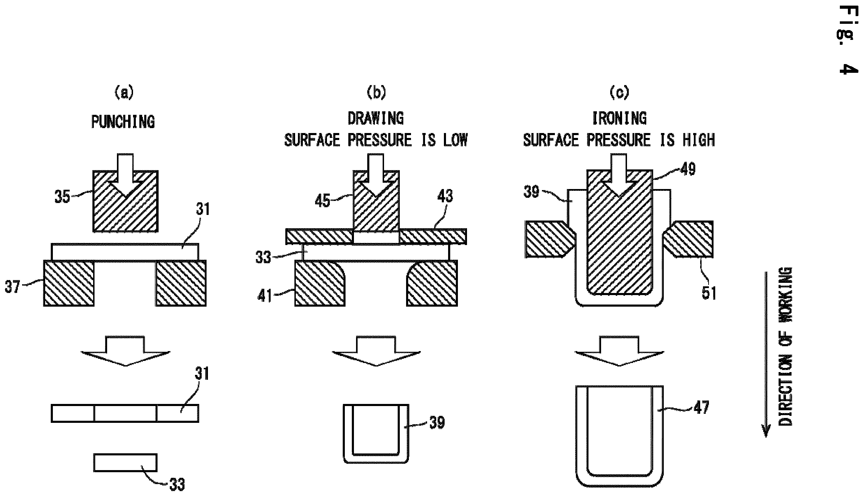

Fig. 4 illustrates a process for producing metal cans, which is a representative example of the process of press molding based on the ironing work.

In Fig. 4, a blank sheet (e.g., aluminum sheet) 31 for use in the production of a metal can is, first, subjected to the punching work to obtain a disk 33 (see Fig. 4 (a)) for forming a metal can.

The punching work is carried out by using a punch 35 having an outer diameter corresponding to the diameter of the disk 33, and a die 37 that holds the blank sheet 31 and has an opening that corresponds to the diameter of the disk 33. That is, the blank sheet 31 held on the die 37 is punched by using the punch 35, and there is obtained the disk 33 of a predetermined size.

Depending on the form of the article to be produced by the above production process, the blank sheet 31 may often be punched into other shapes (e.g., rectangular shape).

The disk 33 obtained as described above is subjected to the drawing work to obtain a draw-worked can of a small height (cylindrical body with bottom) 39 (see Fig. 4(b)). In the drawing work, the disk 33 that is punched is held on the die 41, the circumference of the disk 33 being held by a blank holder jig 43. The die 41 has an opening formed therein. The disk 33 is pushed into the opening of the die 41 by using a punch 45 for drawing work. There is thus obtained a draw-worked can 39.

The corner at the upper end of the opening of the die 41 (on the side of holding the disk 33) is rounded (curved) so that the disk 33 can be quickly pushed into the opening of the die 41 without being folded. The punch 45 has an outer diameter that is set to be smaller than the diameter of the opening of the die 41 by an amount nearly equal to the thickness of the disk 33. In the drawing work, therefore, the thickness is not almost reduced.

Next, the draw-worked can 39 obtained above is subjected to the ironing work whereby a metallic can body having a large height (draw-ironed can) 47 is molded (see Fig. 4 (c)).

In the ironing work, a punch 49 for ironing is inserted in the draw-worked can 39 obtained through the above drawing work. The punch 49 is then lowered while bringing the outer surface of the draw-worked can 39 into pressed contact with the inner surface of an ironing die 51 of the shape of a ring. The thickness of the side wall of the draw-worked can 39 is thus reduced by the ironing die 51. There is thus obtained a metallic can body 47 of which the thickness is reduced and of which the height is increased depending upon the degree of reduction in the thickness.

Namely, the metallic can body 47 is a blank can which is not yet being printed and not yet being subjected to the necking, either.

As will be understood from Fig. 4, in a series of steps including punching work, drawing work and ironing work, no slipperiness is required in the punching work. As the step goes from the drawing work to the ironing work, however, an increasing slipperiness is required between the mold and the article to be molded. In the ironing work, in particular, the greatest surface pressure is exerted on the outer surface of the article being molded.

It is therefore desired that the working surface of the die 51 for ironing work (surface on where the article being molded and the die 51 come in contact with each other) is the surface 1 of the diamond that is formed as described above and whose surface is polished as described above, and that the grooves of the fine periodic structure are formed in the surface 1 by the method described above.

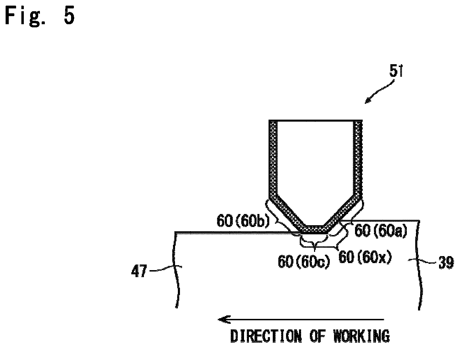

Referring to Fig. 5 as well as Fig. 4 (specifically, Fig. 4(c)), the die 51 has, at least, a working surface 60 which is the surface 1 of the diamond as shown in Fig. 1. In the working surface 60, there have been formed the grooves 3 of the fine periodic structure by the method described above.

As shown in Fig. 5, the working surface 60 of the die 51 as a whole has a shape that becomes narrow toward an end, and includes a pair of tilted surfaces 60a and 60b, and a flat end surface 60c between the tilted surfaces 60a and 60b. Here, the flat end surface 60c and part of the tilted surface 60a (continuous to the end surface 60c) on the upstream side in the direction of working, are forming an acting surface 60x that really comes into contact with the outer surface of a draw-worked can 39 that is the article being molded. Therefore, so far as the surface 1 of the diamond is formed on the acting surface 60x, the film of the diamond forming the above-mentioned surface 1 may be formed on the whole surface of the die 51, or may be formed on the working surface 60 which is part of the surface of the die 51, or may be formed being limited to be on the acting surface 60x.

The grooves 3 of the fine periodic structure have been formed in at least part of the acting surface 60x.

The die 51 for ironing work has the film of the diamond formed on a predetermined surface of a rigid base material to form the surface 1 of the diamond thereon. Here, the rigid base material has a strength capable of withstanding severe ironing work and a heat resistance capable of withstanding the heat of a high temperature at the time of forming the film of the diamond. The rigid base material is made of the so-called cemented alloy obtained by sintering a mixture of, for example, tungsten carbide (WC) and a metal binder such as cobalt, or is made of ceramics such as silicon carbide (SiC) or silicon nitride ($Si_3N_4$) .

According to the process described above, there is obtained a blank can 47 having a mirror finished highly smooth outer surface due to the ironing work by using the die 51 for ironing work that has, on the working surface 60 thereof, the surface 1 of the diamond forming therein the grooves 3 of the fine periodic structure as described above. Besides, the blank can 47 has, in the outer surface (mirror surface) thereof, the grooves of the fine periodic structure transferred thereto simultaneously with the ironing work. Therefore, the blank can 47 expresses the structural color and features a greatly improved commercial value.

That is, the working surface 60 exhibits excellent slipperiness and provides the hard surface 1 of the diamond on which the metallic material being worked does not easily adhere . Therefore, the outer surface of the blank can 47 becomes the highly smooth mirror surface, and the grooves 3 of the fine periodic structure are effectively transferred into the highly smooth mirror surface by the ironing work to vividly express the structural color.

Besides, even when the ironing work is executed repetitively, the metallic material that is worn out or being worked is effectively suppressed from adhering. Accordingly, the grooves 3 of the fine periodic structure are effectively prevented from being extinguished by the repetitive working, and the tool maintains a greatly extended service life. It is, therefore, made possible to mold a number of blank cans 47 without replacing the die 51 for ironing work and, therefore, to offer a great advantage from the industrial point of view.

Further, the region where the grooves 3 of the fine periodic structure are formed in the working surface (surface 1 of the diamond) of the die 51 for ironing work, has a size which is so large that the structural color is clearly legible.

Here, use of the die 51 for ironing work shown in Fig. 4 (c) makes it possible to execute the severe ironing work either in the case of a no-lubrication system without using a lubricant such as wax (so-called dry press system) or in the case of a low lubrication system which uses the lubricant such as wax but in only a very small amount.

Further, the ironing work based on the use of the die 51 for ironing work can be adapted to a variety of metals or alloys . For example, aluminum, copper, iron, alloys containing these metals, as well as surface-treated steel sheets such as tin-plated steel sheets like tin plates, can be subjected to the severe ironing work of high ironing ratios by using the die 51 for ironing work.

Specifically, the die 51 for ironing work can be favorably used for the ironing work at the time of producing metal can bodies through the above-mentioned process shown in Fig. 4. Most desirably, the die 51 for ironing work can be adapted to producing the aluminum or aluminum alloy cans (specifically, seamless cans).

Moreover, the ironing work shown in Fig. 4(c) can be carried out in one step using only one die 51 for ironing work or can also be carried out through a multiplicity of steps continuously by arranging the dies for ironing work in many steps in the direction of working. Namely, the ironing work can be carried out by a suitable method depending on the height and thickness (thickness of the body portion) of the desired blank can 47. When the ironing work is to be carried out through the multiplicity of steps, however, the grooves 3 of the fine periodic structure may be formed in only the final die for ironing work and the other dies may be forming only the surface 1 of the diamond thereon. This is because if the ironing work is carried out after having carried out the ironing work by using the die that is forming the grooves 3 of the fine periodic structure, then the grooves of the fine periodic structure that are transferred will be wiped out.

In the foregoing was described a mold for plastic work and a method of transferring the grooves of the fine periodic structure based upon the case of ironing work. However, the mold for plastic work and the method of transferring the grooves of the fine periodic structure are in no way limited to those of the above disclosure but can also be modified in design in a variety of ways. For instance, the surface of the diamond may be formed on the working surface of the mold for plastic work other than the die for ironing work, and the grooves of the fine periodic structure may be formed in the surface of the diamond being regularly arranged to develop a structural color. By using the above mold, the metallic base material can be plastically worked by a method depending on the kind of the mold, and the grooves of the fine periodic structure can be transferred into the surface of the metallic base material simultaneously with the plastic work.

The foregoing description has also explained an embodiment of the laser beam irradiation apparatus and the method of forming the grooves of the fine periodic structure of the invention which, however are in no way limited to the above embodiment only but can also modified in a variety of other ways without departing from the scope of the invention, as defined in the appended claims.

EXAMPLES

The invention will now be described by using the following Examples to which only, however, the invention is in no way limited.

Referring to Fig. 2, grooves of a fine periodic structure were formed in a die for ironing work that possessed a mean surface roughness Ra of 0.018 $\mu$m and a film of the diamond formed thereon. Concretely, the light flux of the third harmonics (wavelength, 355 nm) of a Q-switched pulse YAG laser was passed through the beam splitter 12 so as to be divided into a plurality of light fluxes.

The divided light fluxes were passed through the collimator element 13. The light fluxes unnecessary for the interference were blocked by the light flux selection element 14 placed at a position of the focal point, and only the necessary fluxes (two fluxes) were permitted to pass through. The light fluxes that have passed through were condensed by using the condensing element 15, and were intersected and interfered so as to be projected onto the surface of the diamond in a region of interference. Moreover, though not diagramed, the light flux was permitted to pass through a prism and its optical axis was bent so as to be projected onto the inner diameter portion that was the working surface of the die for ironing work. Furthermore, though not diagramed, a driving stage on which the die for ironing work was installed was moved so as to project the beam onto the necessary region. The pulse YAG laser consisted of a pulse width of 5 ns and a recurring frequency of 10 Hz. When a single pulse was irradiated with an irradiation energy density of 700 mJ/cm$^2$, there were observed grooves of a fine periodic structure formed in the surface of the diamond.

Further, the lattice pitch of the beam splitter 12 was changed to vary the angle $\theta$ of intersection of the light fluxes, and the distance between the grooves of the fine periodic structure formed in the surface of the diamond was set to be 1.5 $\mu$m and 3 $\mu$m.

Next, an aluminum sheet was subjected to the ironing work by using the die that was obtained. The aluminum sheet was the sheet A3104 that was rolled down to a thickness of 0.27 mm. The aluminum sheet was punched, and was draw worked to form a cylinder with bottom having a diameter of $\phi$ 95 mm which was then used for the molding test. The molding test was conducted by using a hydraulic press, moving a punch of an outer diameter of $\phi$ 66 mm at a speed of 1 m/s to, first, execute the draw working to thereby form a cylinder of $\phi$ 66 mm. The cylinder was then subjected to the ironing work three times. In the ironing work of the third time, there was used the die forming the grooves of the fine periodic structure therein to thereby transfer the fine longitudinal grooves into the surface of the blank can. The blank cans were formed by using a lubricating agent (coolant) (wet forming) and without using the lubricating agent (dry forming). The surfaces of the blank cans were evaluated with the naked eye.

Under either condition, the structural color appeared on the surfaces of the blank cans. The appearance was nearly the same irrespective of the distances between the grooves of the fine periodic structure. When no lubricating agent was used, the structural color could be seen from a wider range of directions and more vividly than when the lubricating agent was used. This is attributed to that the lubricating agent that is used stays in the interface between the die and the can causing a decrease in the transferability. Without using the lubricating agent, on the other hand, the die and the can come into direct contact with each other. Therefore, the transferability is not interrupted and the structural color appears more.

Description of Reference Numerals:

    1: Surface of the diamond
    3: Grooves of a fine periodic structure
    51: Die for ironing work
    60: Working surface

**Claims**

1. A method of forming grooves of a fine periodic structure (3) in a diamond surface (1) by irradiating at least part of the diamond surface (1) having a mean surface roughness Ra of not more than 0.1 $\mu$m with a laser beam of a pulse width of not less than 1 ns generating a periodic intensity profile,
   wherein the diamond surface (1) is formed of a diamond film having a polycrystalline structure.

2. The method according to claim 1, wherein said grooves of the fine periodic structure (3) are regularly arranged to express a structural color.

3. The method according to claim 1, wherein the diamond surface (1) is irradiated with said laser beam with a fluence of not less than 200 mJ/cm$^2$.

4. The method according to claim 1, wherein said laser beam has a wavelength of shorter than 1064 nm.

**Patentansprüche**

1. Verfahren zur Bildung von Rillen mit einer feinen periodischen Struktur (3) in einer Diamantoberfläche (1) durch Bestrahlung von mindestens einem Teil der Diamantoberfläche (1) mit einer mittleren Oberflächenrauheit Ra von nicht mehr als 0,1 μm mit einem Laserstrahl mit einer Pulsbreite von nicht weniger als 1 ns, der ein periodisches Intensitätsprofil erzeugt,
   wobei die Diamantoberfläche (1) aus einem Diamantfilm gebildet ist, der eine polykristalline Struktur aufweist.

2. Verfahren nach Anspruch 1, wobei die Rillen der feinen periodischen Struktur (3) regelmäßig ausgelegt sind, um eine Strukturfarbe auszudrücken.

3. Verfahren nach Anspruch 1, wobei die Diamantoberfläche (1) mit dem Laserstrahl mit einer Fluenz von nicht weniger als 200 mJ/cm$^2$ bestrahlt wird.

4. Verfahren nach Anspruch 1, wobei der Laserstrahl eine Wellenlänge von weniger als 1064 nm aufweist.


**Revendications**

1. Procédé de formation de rainures d'une structure périodique fine (3) dans une surface de diamant (1) en irradiant au moins une partie de la surface de diamant (1) ayant une rugosité de surface moyenne Ra non supérieure à 0,1 μm avec un faisceau laser d'une largeur d'impulsion non inférieure à 1 ns générant un profil d'intensité périodique,
   dans lequel la surface de diamant (1) est formée d'un film de diamant ayant une structure polycristalline.

2. Procédé selon la revendication 1, dans lequel lesdites rainures de la structure périodique fine (3) sont agencées régulièrement pour exprimer une couleur structurelle.

3. Procédé selon la revendication 1, dans lequel la surface de diamant (1) est irradiée avec ledit faisceau laser avec une fluence non inférieure à 200 mJ/cm$^2$.

4. Procédé selon la revendication 1, dans lequel ledit faisceau laser a une longueur d'onde plus courte que 1064 nm.

Fig. 1

Fig. 2

Fig. 3

(HIGH INTENSITY ZONE)

λ

θ

(INTERFERENCE REGION)

20

λ

Fig. 4

Fig. 5

51

60 (60b)

60 (60a)

60 (60c)  60 (60x)

47

39

DIRECTION OF WORKING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5169162 A
- JP 4733193 B
- JP 2004188511 A
- JP 5336095 B
- JP 2003165548 A
- JP 2011177883 A